# EUROPÄISCHE PATENTSCHRIFT

(11) **EP 1 621 482 B1**
(45) Veröffentlichungstag und Bekanntmachung des Hinweises auf die Patenterteilung: **20.02.2008**
(21) Anmeldenummer: 05015410.3
(22) Anmeldetag: 15.07.2005
(51) Int. Cl.: B65G 1/04, B65G 1/06

(54) **Vorrichtung zum örtlich begrenzten Bewegen wenigstens einer Warenpalette**
Device for localised moving of at least one goods pallet
Dispositif pour déplacement localisé d'au moins une palette de marchandises

(30) Priorität: 15.07.2004 DE 102004034130
(43) Veröffentlichungstag der Anmeldung: 01.02.2006
(73) Patentinhaber: Buse, Heinz, 26180 Bad Zwischenahn (DE)
(72) Erfinder: Buse, Heinz, 26180 Bad Zwischenahn (DE)
(74) Vertreter: Eisenführ, Speiser & Partner

(56) Entgegenhaltungen:
- DE-A1- 3 300 441
- DE-A1- 3 714 638
- US-A1- 2003 228 208
- PATENT ABSTRACTS OF JAPAN Bd. 018, Nr. 044 (M-1547), 24. Januar 1994 (1994-01-24) & JP 05 270650 A (HIRATA KIKO KK), 19. Oktober 1993 (1993-10-19)

## Beschreibung

Die Erfindung betrifft eine Vorrichtung zum örtlich begrenzten Bewegen wenigstens einer Warenpalette, insbesondere zum Einstellen der Warenpalette in Regalböden, nach den oberbegrifflichen Merkmalen des Anspruchs 1.

Eine derartige Vorrichtung ist aus der JP-A-05 270 650 bekannt. Als Vorrichtungen zum Bewegen von Warenpaletten sind einerseits mobile Vorrichtungen, wie Gabelstapler, bekannt. Auf der anderen Seite gibt es immobile Vorrichtungen, mit denen Warenpaletten gehandhabt werden können. Diese immobilen Vorrichtungen können beispielsweise als Kraneinrichtungen ausgebildet sein.

Die Erfindung betrifft eine immobile Vorrichtung zum örtlich begrenzten Bewegen einer oder mehrerer Warenpaletten. Eine Warenpalette soll insbesondere in einen Regalboden eingestellt werden, dabei kann sie vorzugsweise von der Ladefläche eines Lastkraftwagens oder eines Güterwaggons abgenommen werden. Mit der erfindungsgemäßen Vorrichtung ist auch ein Entnehmen von Warenpaletten aus Regalböden ermöglicht, anschließend sollen sie auf die Ladeflächen aufgebracht werden. Derartige Warenpaletten können auch Aufbauten, beispielsweise Container - Aufbauten, aufweisen.

Der Erfindung liegt die Aufgabe zugrunde, eine Vorrichtung der eingangs genannten Gattung aufzuzeigen, mit der ein sicheres Überführen von Warenpaletten aus Transportfahrzeugen in Ablagepositionen und umgekehrt ermöglicht ist.

Diese Aufgabe wird durch die kennzeichnenden Merkmale des Anspruchs 1 gelöst.

Die erfindungsgemäße Vorrichtung zum örtlich begrenzten Bewegen wenigstens einer Warenpalette besteht aus zwei Baugruppen. Die erste Baugruppe ist das Aufnahmebasisgerät, während die zweite Baugruppe durch das Übernahmeaufsatzgerät ausgebildet ist.

Erfindungsgemäß ist vorgesehen, daß das Aufnahmebasisgerät und das Übernahmeaufsatzgerät voneinander unabhängig die Warenpalette handhaben können. Dazu weist das Aufnahmebasisgerät Antriebsmittel und das Übernahmeaufsatzgerät Abtriebsmittel auf. Die Antriebsmittel des Aufnahmebasisgerätes dienen dem Aufnehmen der Warenpalette beispielsweise von der Ladefläche eines Transportfahrzeuges. Die Warenpalette wird von diesem Transportfahrzeug abgenommen und auf das Aufnahmebasisgerät aufgelegt. Das Übernahmeaufsatzgerät kann die Warenpalette vom Aufnahmebasisgerät übernehmen. Anschließend kann die Warenpalette mit den Abtriebsmitteln des Übernahmeaufsatzgerätes wieder abgegeben werden, bei einem Einstellen der Warenpalette in ein Regal ist ein Abgeben auf einen Regalboden möglich.

Soll eine Warenpalette aus dem Regal auf die Ladefläche eines Transportfahrzeuges gebracht werden, so wird die Warenpalette mit dem Übernahmeaufsatzgerät aus dem Regalboden entnommen, von dem Übernahmeaufsatzgerät auf das Aufnahmebasisgerät übergeben und anschließend von diesem Aufnahmebasisgerät mit seinen Antriebsmitteln auf die Transportfläche gebracht.

Durch die Unterteilung der erfindungsgemäßen Vorrichtung in zwei Baugruppen sind die Antriebsmittel und die Abtriebsmittel an die jeweiligen Aufgaben vorteilhaft anpaßbar, so daß ein sicheres Überführen der Warenpalette gewährleistet ist.

Nach der Erfindung ist vorgesehen, daß das Aufnahmebasisgerät ein Gestell aufweist, das Fahrbahnelemente für an der Warenpalette angeordnete Fahrelemente hat. Das Aufnahmebasisgerät ist gestellartig ausgebildet, so daß es einerseits eine gerüstartige und damit leichte Ausbildung hat und andererseits die erforderlichen Gewichtskräfte einer insbesondere beladenen Warenpalette aufnehmen kann. Das Gestell hat Fahrbahnelemente, auf welche die Warenpalette aufschiebbar ist. An der Warenpalette sind dazu Fahrelemente vorgesehen, die beispielsweise als Walzen ausgebildet sind. Die Fahrbahnelemente sind vorzugsweise als sich über die gesamte Länge des Aufnahmebasisgerätes erstreckende Schienen ausgebildet, wobei die Schienen zueinander parallel ausgerichtet sind. Über die gesamte Länge des Aufnahmebasisgerätes können somit mehrere Paletten aufgebracht werden. Es ist auch möglich, auf das Aufnahmebasisgerät eine größere Warenpalette aufzubringen, die gegebenenfalls aus mehreren Palettenabschnitten, welche miteinander verbunden sind, ausgebildet ist. Vorzugsweise entsprechen die Maße dieser gesamten Warenpalette den Maßen der Ladefläche des Transportfahrzeuges. Mit der erfindungsgemäßen Vorrichtung ist es möglich, eine derartige Warenpalette in einem Stück handzuhaben, indem das Aufnahmebasisgerät und auch das Übernahmeaufsatzgerät entsprechend dimensioniert sind. Die Schienen des Aufnahmebasisgerätes laufen über seine gesamte Länge, so daß das Aufnahmebasisgerät über seine gesamte Länge in der Lage ist, Warenpaletten aufzunehmen.

Nach der Erfindung ist noch vorgesehen, daß die Fahrbahnelemente an dem Gestell des Aufnahmebasisgerätes in ihrer Längsrichtung bewegbar angeordnet sind. Durch diese Bewegbarkeit ist ermöglicht, daß die Fahrbahnelemente aus ihrer normalen Lage heraus bewegbar sind. Die Bewegung erfolgt dabei in Fortsetzung ihrer Längsrichtung, so daß auf diese Weise eine Verlängerung der Fahrbahnelemente in der einen oder in der anderen Richtung durch ein entsprechendes Bewegen der Fahrbahnelemente erreichbar ist. Dieses Bewegen der Fahrbahnelemente kann insbesondere dazu genutzt werden, die Fahrbahnelemente aus dem Gestell des Aufnahmebasisgerätes heraus einem Transportfahrzeug anzunähern. So ist ermöglicht, daß die als Schienen ausgebildeten Fahrbahnelemente bis zum hinteren Rand der Ladefläche eines Lastkraftwagens verschoben werden, auf dem eine Warenpalette angeordnet ist. Nach dem Heranführen der Schienen ist die Warenpalette mit geeigneten Bewegungsmitteln von der Ladefläche des Lastkraftwagens auf die Schiene zu bewegen. Ist die Warenpalette vollständig auf den Schienen angeordnet, so können die Fahrbahnelemente wieder in ihre Ursprungslage innerhalb des Gestells verschoben werden. Nun ist die Warenpalette für die Übergabe an das Übernahmeaufsatzgerät bereit.

Zu einem Bewegen der Fahrbahnelemente dienen vorzugsweise Antriebselemente. Die Antriebselemente können Elektromotoren umfassen, über deren Wellen mit den Fahrbahnelementen in haltender Wirkverbindung stehende Gurte geführt werden.

Zur weiteren Ausbildung des Aufnahmebasisgerätes ist noch vorgesehen, daß dieses ein Fahrgestell hat. Mit dem Fahrgestell ist das Aufnahmebasisgerät verfahrbar, wobei dieses Verfahren im Zusammenhang mit dem Bewegen der Fahrbahnelemente stehen kann. Sind die Fahrbahnelemente so weit verschoben, daß sie an die Ladefläche eines Transportfahrzeuges angenähert sind, kann durch ein Verfahren des Aufnahmebasisgerätes mit seinem Fahrgestell noch eine präzise Anpassung der Anlage der Fahrbahnelemente an das Transportfahrzeug erreicht werden. Das Fahrgestell kann dazu auf der Höhe der Enden der Fahrbahnelemente angeordnete Räder umfassen, deren Achsen etwa parallel zur Längsachse der Fahrbahnelemente ausgerichtet sind. Mit dem Fahrgestell sind die Fahrbahnelemente somit um einen Mittelpunkt des Fahrgestells drehbar, so daß die winkelige Ausrichtung der Fahrbahnelemente zum Beispiel zur Ladekante eines Transportfahrzeuges verändert werden kann.

Zum Zwecke dieses Ausrichtens kann das Aufnahmebasisgerät mit einer Laservorrichtung ausgerüstet sein. Damit ist das Transportfahrzeug anpeilbar um eine möglichst exakte Aussichtung des Aufnahmebasisgerätes zu erreichen.

Eine nächste Weiterbildung der Erfindung sieht vor, daß das Übernahmeaufsatzgerät mit dem Aufnahmebasisgerät in Eingriff bringbar ist, wobei das Übernahmeaufsatzgerät unterhalb der Ebene der Fahrbahnelemente des Gestells des Aufnahmebasisgerätes anordbar ist. Das Ineingriffbringen von Übernahmeaufsatzgerät und Aufnahmebasisgerät dient dem Übernehmen bzw. dem Übergeben der Warenpalette zwischen diesen Baugruppen. Dabei ist vorgesehen, daß das Übernahmeaufsatzgerät unterhalb der Ebene der Fahrbahnelemente anordbar ist. Im Zustand dieser Anordnung kann auf die Fahrbahnelemente eine Warenpalette aufgebracht werden. Diese wird zunächst von dem Aufnahmebasisgerät, nämlich von den Fahrbahnelementen seines Gestells, getragen. Wird nun das Übernahmeaufsatzgerät aus der Ebene unterhalb der Fahrbahnelemente angehoben, so erfolgt ein Übernehmen der Warenpalette durch das Übernahmeaufsatzgerät. Soll eine Warenpalette vom Übernahmeaufsatzgerät auf das Aufnahmebasisgerät übergeben werden, so wird das Übernahmeaufsatzgerät so weit abgesenkt, daß es unterhalb der Ebene der Fahrbahnelemente angeordnet ist. Die Warenpalette kommt dann auf den Fahrbahnelementen zur Auflage und ist dadurch an das Aufnahmebasisgerät übergeben.

Bevorzugt ist vorgesehen, daß das Übernahmeaufsatzgerät ein Plattenelement ist, das Durchbrechungen für die Fahrbahnelemente des Gestells des Aufnahmebasisgerätes hat. Auf dem Plattenelement kann eine Warenpalette zur Auflage kommen. Aufgrund der vorgesehenen Durchbrechungen im Plattenelement für die Fahrbahnelemente des Gestells des Aufnahmebasisgerätes ist das Übernahmeaufsatzgerät unterhalb dieser Fahrbahnelemente führbar. Die Fahrbahnelemente stehen dann durch das Plattenelement hindurch nach oben vor.

Eine nächste Weiterbildung der Erfindung sieht vor, daß in der Oberfläche des Übernahmeaufsatzgerätes Rollenelemente angeordnet sind, welche quer zu den Fahrbahnelementen des Gestells des Aufnahmebasisgerätes ausgerichtete Drehachsen aufweisen. Eine Warenpalette kommt auf dem Übernahmeaufsatzgerät, vorzugsweise dem Plattenelement auf diesen Rollenelementen zur Auflage. Diese Auflage ist zunächst fixierbar, wenn jedoch die Warenpalette von dem Übernahmeaufsatzgerät zum Beispiel in einen Regalboden eingestellt werden soll, sind diese Rollenelemente für ein entsprechendes Verschieben der Warenpalette behilflich.

Es ist vorgesehen, daß das Übernahmeaufsatzgerät in eine Ebene unterhalb der Fahrbahnelemente verbracht werden kann. Dieses Verbringen erfolgt nach einer Weiterbildung der Erfindung durch eine Hubeinrichtung, mit der das Übernahmeaufsatzgerät gehalten ist. Mit der Hubeinrichtung kann das Übernahmeaufsatzgerät durch ein Anheben den übereinander angeordneten Regalböden zugeordnet werden, um eine Warenpalette zu übergeben oder aus dem Regal zu entnehmen. Dazu ist der Hubeinrichtung vorzugsweise ein Regalsystem mit Einstellboxen für Warenpaletten zugeordnet. Über die Hubeinrichtung ist die erfindungsgemäße Vorrichtung somit einem Regalsystem zugeordnet.

Die Hubeinrichtung umfaßt vorzugsweise Seilzüge, welche das Übernahmeaufsatzgerät tragen und welche vertikal ausgerichteten Posten des Regalsystems zugeordnet sind. Mit den Seilzügen ist das Übernahmeaufsatzgerät höhenverstellbar gehalten. Dabei können noch Vorsprünge vorgesehen sein, die an dem Übemahmeaufnahmegerät angeordnet sind und mit den Pfosten in Eingriff stehen. Die Führung des Übernahmeaufnahmegerätes bei seinem Hub ist durch diesen Eingriff verbessert.

Nach einer nächsten Weiterbildung der Erfindung ist vorgesehen, daß die Antriebsmittel und die Abtriebsmittel angetriebene und mit Nocken versehene Gurte sind. Über die Gurte können dabei Kräfte auf die Warenpalette übertragen werden, welche zu ihrem Bewegen auf die erfindungsgemäße Vorrichtung bzw. von der erfindungsgemäßen Vorrichtung erforderlich sind. Die Nocken der Gurte können dabei in Vertiefungen der Warenpalette vorstehen, so daß ein Formschluß zwischen Gurt und Warenpalette hergestellt ist.

Die Antriebsmittel sind dabei vorzugsweise als umlaufende Gurte ausgebildet, welche in paralleler Ausrichtung den Fahrbahnelementen zugeordnet sind. Die Gurte sind dabei vorzugsweise über die gesamte Länge der Fahrbahnelemente angeordnet, so daß sie ein Bewegen der Warenpalette über die gesamten Fahrbahnelemente hinweg auslösen können.

Zur weiteren Ausbildung ist noch vorgesehen, daß die Gurte der Abtriebsmittel als umlaufende Gurte ausgebildet sind, daß das Übernahmeaufsatzgerät eine etwa rechteckige Ausbildung hat und daß die Abtriebsmittel im Bereich der schmalen Seitenränder des Übernahmeaufsatzgerätes angeordnet sind. Die Abtriebsmittel sind dabei vorzugsweise etwa quer zur Wirkrichtung der Antriebsmittel ausgerichtet, so daß eine Warenpalette in zueinander senkrecht stehenden Richtungen auf die erfindungsgemäße Vorrichtung aufgebracht und von dieser weggeführt werden kann.

Ein Ausführungsbeispiel der Erfindung, aus dem sich weitere erfinderische Merkmale ergeben, ist in der Zeichnung dargestellt. Es zeigen:

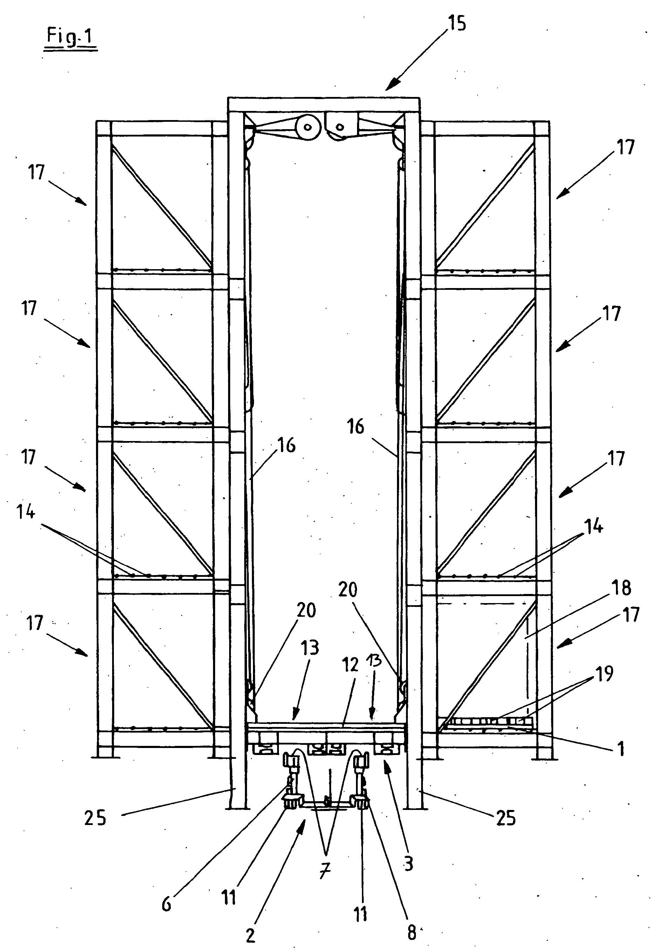

Fig. 1: eine Seitenansicht einer erfindungsgemäßen Vorrichtung zum örtlich begrenzten Bewegen wenigstens einer Warenpalette, welche einem Regallager zugeordnet ist,

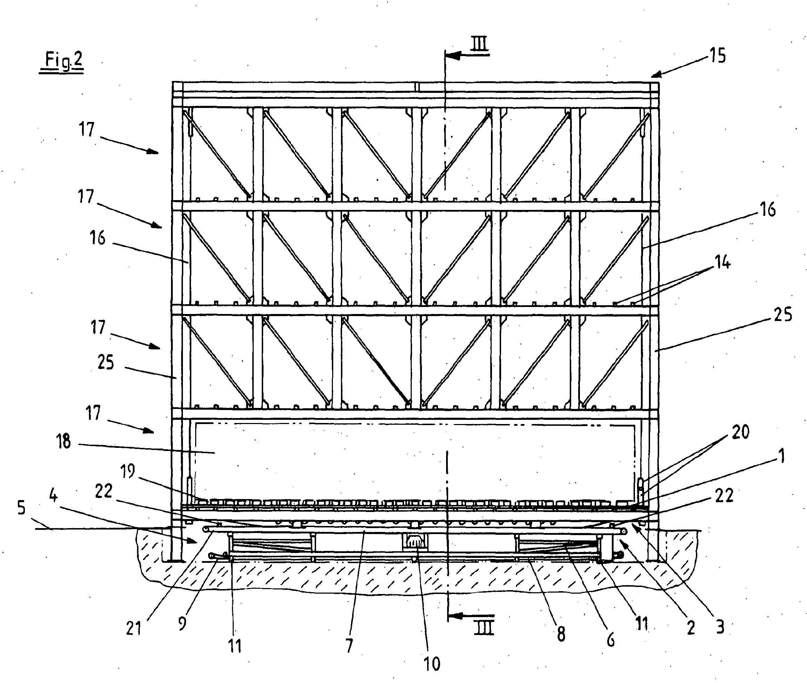

Fig. 2: eine weitere Seitenansicht der erfindungsgemäßen Vorrichtung
   und des Regallagers gem. Fig. 1,
Fig. 3: eine Schnittansicht entlang der Schnittlinie III-III in Fig. 2,
Fig. 4: eine maßstäbliche vergrößerte Ansicht der Einzelheit IV in Fig. 3,
Fig. 5: eine Schnittansicht entlang der Schnittlinie V-V in Fig. 2; und
Fig. 6: eine maßstäbliche vergrößerte Ansicht der Einzelheit VI in Fig. 5.

Die erfindungsgemäße Vorrichtung zum örtlich begrenzten Bewegen wenigstens einer Warenpalette 1 ist aus einem Aufnahmebasisgerät 2 und einem Übernahmeaufsatzgerät 3 ausgebildet.

Das Aufnahmebasisgerät 2 steht in einer Vertiefung 4 eines Fußbodens 5 auf. Das Aufnahmebasisgerät 2 weist ein Gestell 6 auf, dieses Gestell 6 trägt Fahrbahnelemente 7.

Die Fahrbahnelemente 7 sind als Schienen ausgebildet, sie erstrecken sich über die gesamte Länge des Gestells 6 des Aufnahmebasisgerätes 2. In Bezug auf das Gestell 6 können die Fahrbahnelemente 7 entlang ihrer Längserstreckung bewegt werden, dazu weist das Aufnahmebasisgerät 2 noch ein Fahrgestell 8 auf, gegenüber dem die Fahrbahnelemente 7 mit dem Gestell 6 bewegbar sind. Fahrgestell 8 und Gestell 6 sind dabei über Gurte 9 miteinander verbunden, welchen Elektromotore 10 zugeordnet sind.

Das Fahrgestell 8 weist Räder 11 auf, deren Drehachsen quer zur Längserstreckung der Fahrbahnelemente 7 ausgerichtet sind.

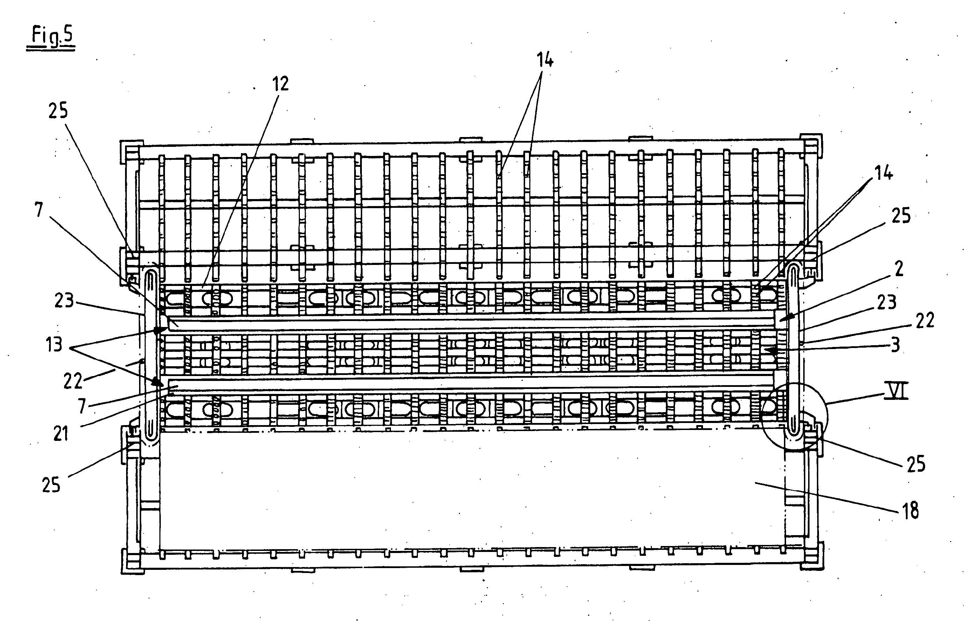

Das Übernahmeaufsatzgerät 3 ist ein Plattenelement 12. Das Plattenelement 12 weist in Fig. 5 dargestellte Durchbrechungen 13 auf, durch welche die Fahrbahnelemente 7 des Aufnahmebasisgerätes 2 vorstehen können. In der Oberseite des Plattenelementes 12 sind Rollenelemente 14 angeordnet, deren Drehachsen parallel zu den längserstreckten Fahrbahnelemente 7 ausgerichtet sind. Über diese Rollenelemente 14 kann eine Warenpalette 1 von Plattenelement 12 in einen Regalboden eingestellt werden, wie in den Figuren gezeigt. Das Übernahmeaufsatzgerät 3 wird von einer Hubeinrichtung 15 gehalten. Die Hubeinrichtung 15 umfaßt Seilzüge 16 an denen das Übernahmeaufsatzgerät 3 aufgehängt ist. Mit den Seilzügen kann das Übernahmeaufsatzgerät 3 in eine Ebene unterhalb der Fahrbahnelemente 7 verfahren werden, gleichzeitig ist mit den Seilzügen 16 ein Zuordnen des Übernahmeaufsatzgerätes 3 den einzelnen Fächern 17 des Regals ermöglicht. Die Warenpalette 1 ist mit einer Ladung 18 einem unteren Regalfach 17 zugeordnet. Die Ladung 18 steht dabei auf der Warenpalette 1 über EURO - Paletten 19 auf.

Mit dem Übernahmeaufsatzgerät 3 ist auch ein Übernehmen einer Warenpalette 1 aus einer Position seitlich neben dem untersten Regalfach 17 möglich. Zum Beispiel von einem Waggon kann eine Warenpalette 1 durch das unterste Regalfach 17 hindurch in das Innere des Regals gezogen werden und auf diesem Weg aus diesem wieder abgegeben werden.

Den Böden in den Fächern 17 sind gleichfalls Rollenelemente 14 zugeordnet, welche das Einstellen einer Warenpalette 1 in ein Fach 17 erleichtern. Nach dem Einstellen der Warenpalette 1 in das Fach 17 wird die Warenpalette 1 fixiert.

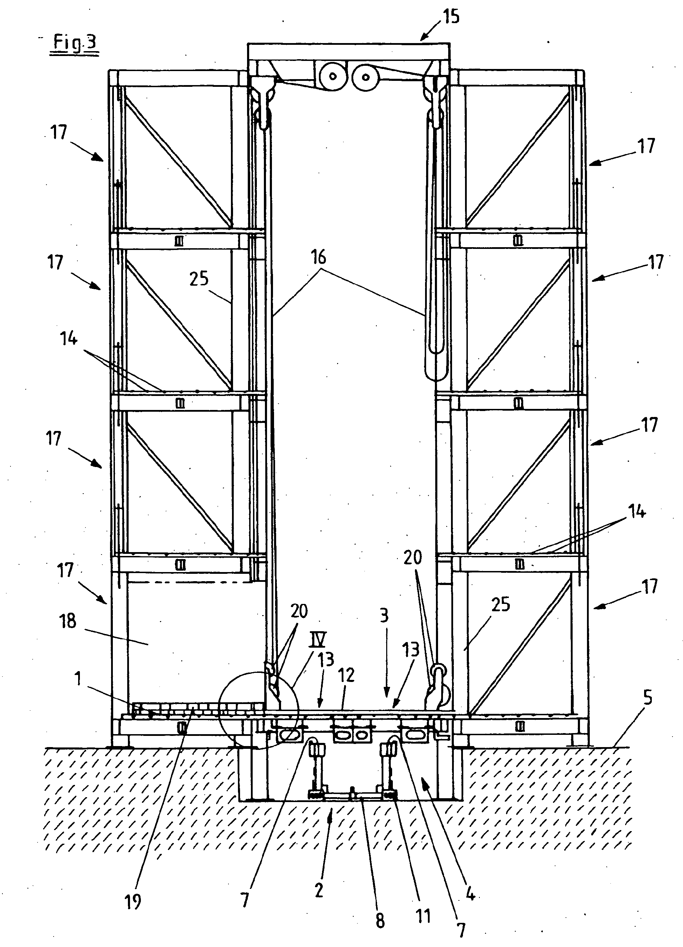

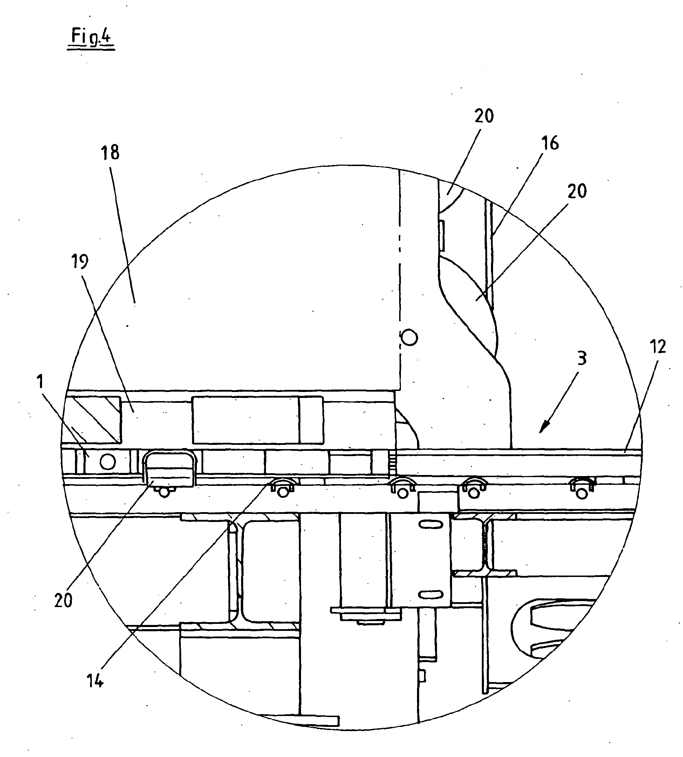

Fig. 3 und 4 zeigen, daß die Seilzüge 16 über Flaschenzugrollen 20 an dem Übernahmeaufsatzgerät 3 angeschlagen sind. Die vergrößerte Darstellung der Warenpalette 1 in Fig. 4 zeigt, daß an der Unterseite der Warenpalette 1 Fahrelemente angeordnet sind, welche als Walzen ausgebildet sind. Die Warenpalette kann mit diesen Fahrelementen über die Fahrbahnelemente 7 des Aufnahmebasisgeräts 2 geführt werden.

Den Fahrbahnelementen 7 sind entlang ihrer Längserstreckung umlaufende Gurte 21 zugeordnet. Auf den Gurten sind Nocken 22 angeordnet, welche mit Vertiefungen der Warenpalette 1 in die Warenpalette 1 mitnehmenden Eingriff bringbar sind.

Auch zum Einstellen der Warenpalette 1 in ein Fach 17 dienen umlaufende Gurte 23, welche Nocken 22 tragen. Diese Gurte 23 sind an Stirnenden des Aufnahmebasisgerätes 2 angeordnet.

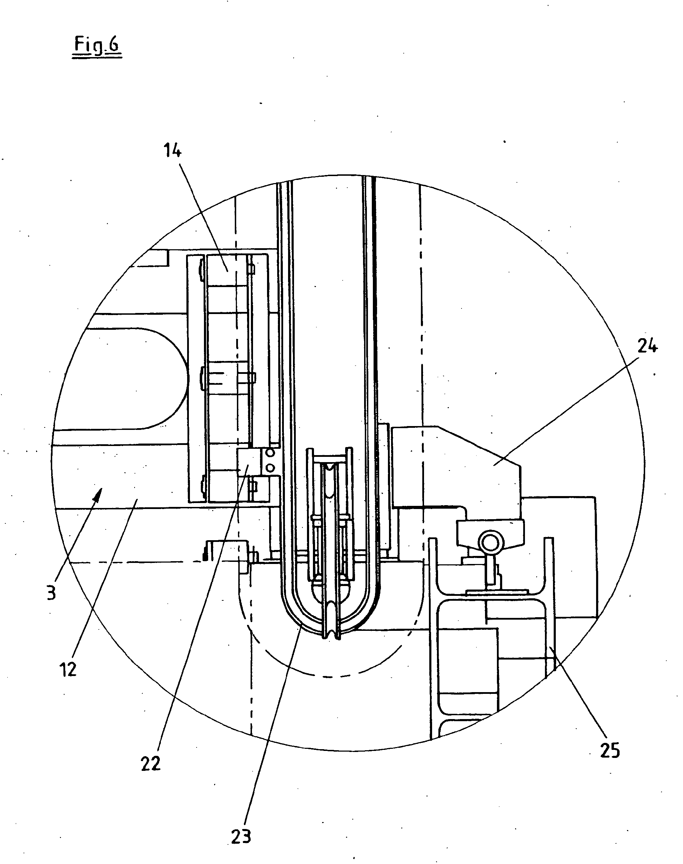

Fig. 6 zeigt noch, daß das Übernahmeaufsatzgerät 3 Vorsprünge 24 aufweist, welche mit den vertikal ausgerichteten Pfosten 25 des Regals in Eingriff stehen.

Die erfindungsgemäße Vorrichtung bildet mit der Hubeinrichtung 15 und dem die Hubeinrichtung 15 tragenden Gerüst ein Modul aus. Dieses Modul ist unabhängig von den Regalböden 17 einsetzbar, es kann zudem mit ganz verschieden konfigurierten Regallagern eingesetzt werden.

## Patentansprüche

1. Vorrichtung zum örtlich begrenzten Bewegen wenigstens einer Warenpalette (1), insbesondere zum Einstellen der Warenpalette in Regalböden, wobei die Warenpalette (1) durch die Vorrichtung von der Ladefläche eines Transportfahrzeugs aufnehmbar und/oder an die Ladefläche eines Transportfahrzeugs direkt abgebbar ist,
**dadurch gekennzeichnet, daß** sie ein Aufnahmebasisgerät (2) aufweist, das Antriebsmittel zum Aufnehmen und Abgeben der Warenpalette (1) auf sich bzw. von sich hat und daß sie ein Übernahmeaufsatzgerät (3) aufweist, das mit dem Aufnahmebasisgerät (2) in die Warenpalette übernehmender bzw. übergebender Wirkverbindung steht und das Abtriebsmittel zum Abgeben und Aufnehmen der Warenpalette (1) von sich bzw. auf sich hat, daß das Aufnahmebasisgerät (2) ein Gestell (6) aufweist, das Fahrbahnelemente (7) für an der Warenpalette (1) angeordnete Fahrelement aufweist und dass die Fahrelemente (7) an dem Gestell (6) in ihrer Längsrichtung bewegbar angeordnet sind.

2. Vorrichtung nach Anspruch 1, **dadurch gekennzeichnet, daß** die Fahrbahnelemente (7) als sich über die gesamte Länge des Aufnahmebasisgerätes (2) erstreckende Schienen ausgebildet sind, wobei die Schienen zueinander parallel ausgerichtet sind.

3. Vorrichtung nach Anspruch 1, **dadurch gekennzeichnet, daß** Antriebselemente zu einem Bewegen der Fahrbahnelemente (7) vorgesehen sind.

4. Vorrichtung nach Anspruch 3, **dadurch gekennzeichnet, daß** die Antriebselemente über Antriebswellen geführte und mit den Fahrbahnelementen (7) in haltender Wirkverbindung stehende Gurte (9) sind.

5. Vorrichtung nach Anspruch 4, **dadurch gekennzeichnet, daß** die Antriebswellen Wellen von Elektromotoren sind.

6. Vorrichtung nach einem der vorhergehenden Ansprüche, **dadurch gekennzeichnet, daß** das Aufnahmebasisgerät (2) ein Fahrgestell (8) hat.

7. Vorrichtung nach Anspruch 6, **dadurch gekennzeichnet, daß** das Fahrgestell (8) auf Höhe der Enden der Fahrbahnelemente (7) angeordnete Räder (11) umfaßt, deren Achsen etwa parallel zur Längsachse der Fahrbahnelemente (7) ausgerichtet sind.

8. Vorrichtung nach einem der Ansprüche 1 bis 7, **dadurch gekennzeichnet, daß** das Übernahmeaufsatzgerät (3) mit dem Aufnahmebasisgerät (2) in Eingriff bringbar ist, wobei das Übernahmeaufsatzgerät (3) unterhalb der Ebene der Fahrbahnelemente (7) des Gestells (6) des Aufnahmebasisgerätes (2) anordbar ist.

9. Vorrichtung nach Anspruch 8, **dadurch gekennzeichnet, daß** das Übernahmeaufsatzgerät (3) ein Plattenelement (12) ist, das Durchbrechungen (13) für die Fahrbahnelemente (7) des Gestells (6) des Aufnahmebasisgerätes (2) hat.

10. Vorrichtung nach einem der vorhergehenden Ansprüche, **dadurch gekennzeichnet, daß** in der Oberfläche des Übernahmeaufsatzgerätes (3) Rollenelemente (14) angeordnet sind, welche parallel zu den Fahrbahnelementen (7) des Gestells (6) des Aufnahmebasisgerätes (2) ausgerichtete Drehachsen aufweisen.

11. Vorrichtung nach einem der vorhergehenden Ansprüche, **dadurch gekennzeichnet, daß** das Übernahmeaufsatzgerät (3) mit einer Hubeinrichtung (15) gehalten ist.

12. Vorrichtung nach Anspruch 11, **dadurch gekennzeichnet, daß** der Hubeinrichtung (15) ein Regalsystem mit Einstellboxen für Warenpaletten (1) zugeordnet ist.

13. Vorrichtung nach Anspruch 12, **dadurch gekennzeichnet, daß** die Hubeinrichtung (15) Seilzüge (16) umfaßt, welche das Übernahmeaufsatzgerät (3) tragen und welche vertikal ausgerichteten Pfosten (25) des Regalsystems zugeordnet sind.

14. Vorrichtung nach Anspruch 13, **dadurch gekennzeichnet, daß** an dem Übernahmeaufsatzgerät (3) mit den Pfosten (25) in Eingriff stehende Vorsprünge (24) angeordnet sind.

15. Vorrichtung nach einem der vorhergehenden Ansprüche, **dadurch gekennzeichnet, daß** die Antriebsmittel und die Abtriebsmittel angetriebene und mit Nocken (22) versehene Gurte (23) sind.

16. Vorrichtung nach Anspruch 15, **dadurch gekennzeichnet, daß** die Antriebsmittel als umlaufende Gurte (23) ausgebildet sind, welche in paralleler Ausrichtung den Fahrbahnelementen (7) zugeordnet sind.

17. Vorrichtung nach Anspruch 15 oder 16, **dadurch gekennzeichnet, daß** die Gurte (23) der Abtriebsmittel als umlaufende Gurte (23) ausgebildet sind, daß das Übernahmeaufsatzgerät (3) eine etwa rechteckige Ausbildung hat und daß die Abtriebsmittel im Bereich der schmalen Seitenränder des Übernahmeaufsatzgerätes (3) angeordnet sind.

## Claims

1. A device for the localised moving of at least one goods pallet (1), particularly for placing the goods pallet into shelves, wherein the goods pallet (1) may be received by the device from the loading surface of a transport vehicle and/or delivered directly to the loading surface of a transport vehicle,
**characterised in that** it comprises a bottom receiving device (2) which has drive means for receiving and delivering the goods pallets (1) on or off the said bottom receiving device, and **in that** it has a top transfer device (3) which is in operative connection, accepting or delivering the goods pallet, with the bottom receiving device (2) and has driven means for delivering and receiving the goods pallet (1) off or on the said top transfer device, **in that** the bottom receiving device (2) has a frame (6) which comprises track elements (7) for running elements arranged on the goods pallet (1), and **in that** the running elements (7) are arranged on the frame (6) so as to be movable in their longitudinal direction.

2. A device according to Claim 1, **characterised in that** the track elements (7) are rails extending over the entire length of the bottom receiving device (2), the rails being oriented parallel with one another.

3. A device according to Claim 1, **characterised in that** drive elements are provided for moving the track elements (7).

4. A device according to Claim 3, **characterised in that** the drive elements are belts (9) guided via drive shafts and in holding operative connection with the track elements (7).

5. A device according to Claim 4, **characterised in that** the drive shafts are shafts of electric motors.

6. A device according to one of the preceding claims, **characterised in that** the bottom receiving device (2) has a chassis (8).

7. A device according to Claim 6, **characterised in that** the chassis (8) comprises wheels (11) arranged on the level of the ends of the track elements (7), the axes of which are oriented approximately parallel with the longitudinal axis of the track elements (7).

8. A device according to one of Claims 1 to 7, **characterised in that** the top transfer device (3) may be brought into engagement with the bottom receiving device (2), wherein the top transfer device (3) may be arranged below the plane of the track elements (7) of the frame (6) of the bottom receiving device (2).

9. A device according to Claim 8, **characterised in that** the top transfer device (3) is a plate element (12) which has through-holes (13) for the track elements (7) of the frame (6) of the bottom receiving device (2).

10. A device according to one of the preceding claims, **characterised in that** roller elements (14) are arranged in the surface of the top transfer device (3), which roller elements have axes of rotation oriented parallel with the track elements (7) of the frame (6) of the bottom receiving device (2).

11. A device according to one of the preceding claims, **characterised in that** the top transfer device (3) is held with a lifting device (15).

12. A device according to Claim 11, **characterised in that** associated with the lifting device (15) is a shelving system with placement boxes for goods pallets (1).

13. A device according to Claim 12, **characterised in that** the lifting device (15) comprises cable lines (16) which carry the top transfer device (3) and which are associated with vertically oriented posts (25) of the shelving system.

14. A device according to Claim 13, **characterised in that** projections (24) in engagement with the posts (25) are arranged on the top transfer device (3).

15. A device according to one of the preceding claims, **characterised in that** the drive means and the driven means are driven belts (23) provided with cams (22).

16. A device according to Claim 15, **characterised in that** the drive means are circulating belts (23) which are associated in parallel orientation with the track elements (7).

17. A device according to Claim 15 or 16, **characterised in that** the belts (23) of the driven means are circulating belts (23), **in that** the top transfer device (3) has an approximately rectangular design and **in that** the driven means are arranged in the region of the narrow side edges of the top transfer device (3).

## Revendications

1. Dispositif pour le déplacement localisé limité d'au moins une palette de marchandises (1), notamment pour déposer la palette de marchandises sur des tablettes de rayonnages, la palette de marchandises (1) pouvant être reçue par le dispositif à partir de la surface de chargement d'un véhicule de transport et/ou pouvant être délivrée directement par le dispositif à la surface de chargement d'un véhicule de transport,
**caractérisé en ce qu'**il comprend un appareil de réception de base (2), qui possède des moyens d'entraînement pour recevoir sur soi et pour en délivrer la palette de marchandises (1), **en ce qu'**il comprend également un appareil de reprise rapporté (3), qui est en interaction avec l'appareil de réception de base (2) pour la reprise ou respectivement la rétrocession de la palette de marchandises (1), et qui possède des moyens moteurs pour en délivrer et pour recevoir sur soi la palette de marchandises (1), **en ce que** l'appareil de réception de base (2) présente un châssis (6) qui comporte des éléments de voie de circulation (7) pour des éléments de circulation agencés sur la palette de marchandises (1), et **en ce que** les éléments de voie de circulation (7) sont agencés sur le châssis (6) de manière à être mobiles dans leur direction longitudinale.

2. Dispositif selon la revendication 1, **caractérisé en ce que** les éléments de voie de circulation (7) sont réalisés sous la forme de rails s'étendant sur la totalité de la longueur de l'appareil de réception de base (2), les rails étant orientés parallèlement l'un à l'autre.

3. Dispositif selon la revendication 1, **caractérisé en ce que** sont prévus des éléments d'entraînement pour un déplacement des éléments de voie de circulation (7).

4. Dispositif selon la revendication 3, **caractérisé en ce que** les éléments d'entraînement sont des sangles ou courroies (9) qui sont guidées sur des arbres d'entraînement et sont en interaction de retenue avec les éléments de voie de circulation (7).

5. Dispositif selon la revendication 4, **caractérisé en ce que** les arbres d'entraînement sont des arbres de moteurs électriques.

6. Dispositif selon l'une des revendications précédentes, **caractérisé en ce que** l'appareil de réception de base (2) possède un châssis de circulation (8).

7. Dispositif selon la revendication 6, **caractérisé en ce que** le châssis de circulation (8) comprend, agencées à hauteur des extrémités des éléments de voie de circulation (7), des roues (11) dont les axes sont orientés environ parallèlement à l'axe longitudinal des éléments de voie de circulation (7).

8. Dispositif selon l'une des revendications 1 à 7, **caractérisé en ce que** l'appareil de reprise rapporté (3) peut être amené en prise avec l'appareil de réception de base (2), l'appareil de reprise rapporté (3)pouvant être disposé en-dessous du plan des éléments de voie de circulation (7) du châssis (6) de l'appareil de réception de base (2).

9. Dispositif selon la revendication 8, **caractérisé en ce que** l'appareil de reprise rapporté (3) est un élément de plaque (12) qui possède des évidements de passage (13) pour les éléments de voie de circulation (7) du châssis (6) de l'appareil de réception de base (2).

10. Dispositif selon l'une des revendications précédentes, **caractérisé en ce que** dans la surface de l'appareil de reprise rapporté (3) sont agencés des éléments de galets (14), qui présentent des axes de rotation orientés parallèlement aux éléments de voie de circulation (7) du châssis (6) de l'appareil de réception de base (2).

11. Dispositif selon l'une des revendications précédentes, **caractérisé en ce que** l'appareil de reprise rapporté (3) est supporté à l'aide d'un dispositif de levage (15) .

12. Dispositif selon la revendication 11, **caractérisé en ce qu'**au dispositif de levage (15) est associé un système de rayonnages comprenant des box de dépose pour des palettes de marchandises (1).

13. Dispositif selon la revendication 12, **caractérisé en ce que** le dispositif de levage (15) comprend des systèmes de câbles de traction (16), qui supportent l'appareil de reprise rapporté (3) et auxquels sont associés des montants (25) d'orientation verticale du système de rayonnages.

14. Dispositif selon la revendication 13, **caractérisé en ce que** sur l'appareil de reprise rapporté (3) sont agencées des protubérances (24) qui sont en prise avec les montants (25).

15. Dispositif selon l'une des revendications précédentes, **caractérisé en ce que** les moyens d'entraînement et les moyens moteurs sont des sangles ou courroies (23) entraînées et munies de cames d'entraînement (22).

16. Dispositif selon la revendication 15, **caractérisé en ce que** les moyens d'entraînement sont réalisés en tant que sangles ou courroies (23) en révolution, qui sont associées aux éléments de voie de circulation (7) selon une orientation parallèle à ceux-ci.

17. Dispositif selon la revendication 15 ou 16, **caractérisé en ce que** les sangles ou courroies (23) des moyens moteurs sont réalisées en tant que sangles ou courroies (23) en révolution, **en ce que** l'appareil de reprise rapporté (3) présente une configuration environ de forme rectangulaire, et **en ce que** les moyens moteurs sont agencés dans la zone des petits côtés de l'appareil de reprise rapporté (3).
